# FASCICULE DE BREVET EUROPEEN

(11) **EP 0 593 344 B1**
(45) Date de publication et mention de la délivrance du brevet: **18.12.1996**
(21) Numéro de dépôt: 93402483.7
(22) Date de dépôt: 08.10.1993
(51) Int. Cl.: H02G 5/06, H02B 13/045

(54) **Système de raccordement des enveloppes de deux appareils dont l'un au moins est sous pression**
Anschlusssystem für die Gehäuse zweier Geräte wovon mindestens eines unter Druck steht
Connecting system for the housings of two devices of which at least one is under pressure

(30) Priorité: 12.10.1992 FR 9212132
(43) Date de publication de la demande: 20.04.1994
(73) Titulaire: GEC ALSTHOM T ET D SA, 75016 Paris (FR)
(72) Inventeur: Marmonier, Jean, F-73100 Aix Les Bains (FR)
(74) Mandataire: Feray, Valérie

(56) Documents cités:
- EP-A- 0 181 955
- DE-A- 2 262 694
- DE-A- 2 364 600
- US-A- 3 886 301

## Description

La présente invention concerne un système de raccordement des enveloppes de deux appareils dont l'un au moins est sous pression. Elle se rapporte plus particulièrement au raccordement des enveloppes d'un sectionneur et d'un disjoncteur par exemple, ou de celles d'un disjoncteur et d'un interrupteur, ou encore de celles de deux appareils électriques quelconques du type précédent.

Les enveloppes de ces appareils sont des enveloppes métalliques reliées électriquement à la terre et contenant tous les éléments sous tension. Elles sont généralement utilisées dans les postes blindés, bien connus de l'homme du métier.

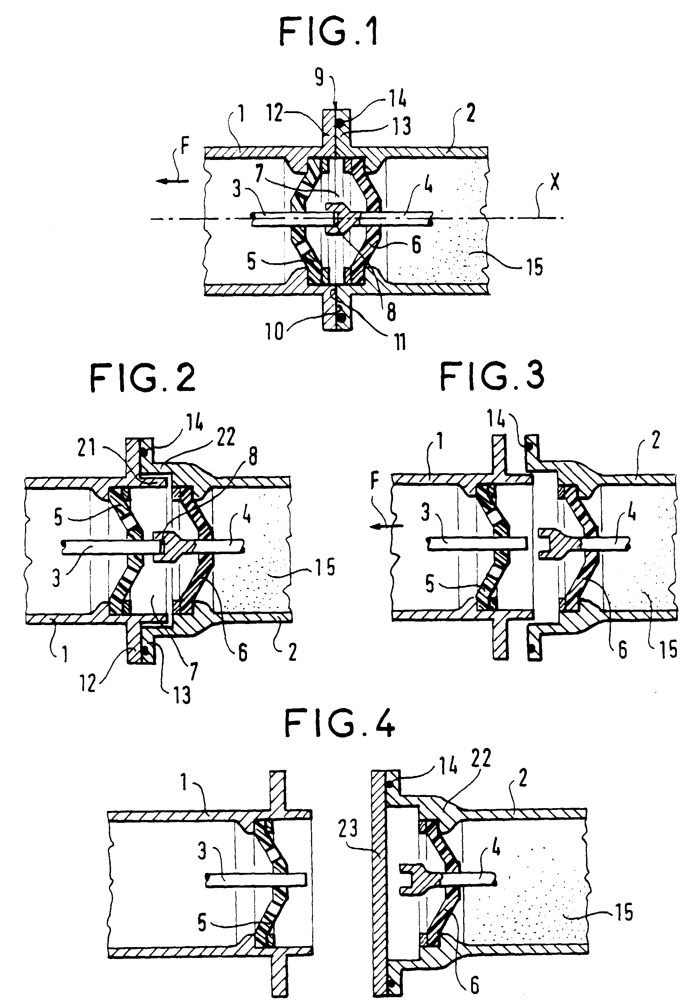

Un système de raccordement classique des enveloppes d'un disjoncteur et d'un sectionneur, par exemple, est représenté en figure 1 en coupe partielle.

Dans cette figure, on voit les extrémités de deux enveloppes cylindriques métalliques 1 et 2 destinées à séparer du milieu extérieur respectivement un disjoncteur et un sectionneur (non représentés) . Deux éléments ou barres de contact 3 et 4 appartenant respectivement au disjoncteur et au sectionneur et destinés à coopérer l'un avec l'autre par embrochage par exemple pour réaliser le raccordement électrique entre ces deux appareils, sont saillants respectivement au-delà de deux parois isolantes 5 et 6 en résine époxy par exemple, fermant transversalement les enveloppes 1 et 2 au voisinage de la zone de raccordement 8 entre les éléments de contact 3 et 4. Les parois 5 et 6 peuvent également servir de supports pour centrer les éléments de contact 3 et 4 dans les enveloppes 1 et 2. La pression d'un fluide 15, généralement de l'hexafluorure de soufre SF₆, est maintenue de manière classique et bien connue de l'homme de l'art à l'intérieur de l'enveloppe 2 et s'exerce donc sur la paroi isolante 6.

Les parois isolantes 5 et 6 sont légèrement courbées vers l'intérieur des enveloppes 1 et 2 de manière à former, une fois le raccordement des éléments de contact 3 et 4 réalisé, un volume fermé 7 autour de la zone de raccordement 8 entre ces derniers. La zone de raccordement 8 se trouve sensiblement au droit d'une zone de contact 9 entre les extrémités 10 et 11 des enveloppes 1 et 2 qui viennent dans le prolongement l'une de l'autre.

Afin de maintenir les enveloppes 1 et 2 solidaires l'une de l'autre, ces dernières sont munies, au niveau de leurs extrémités 10 et 11, de brides de raccordement 12 et 13 sous la forme d'anneaux prolongeant les extrémités 10 et 11 dans le sens transversal par rapport à l'axe longitudinal X des enveloppes 1 et 2. Les brides 12 et 13 sont en contact l'une avec l'autre lorsque les éléments de contact 3 et 4 sont raccordés, et peuvent ainsi être solidarisées par vissage par exemple, au moyen de vis (non représentées). L'étanchéité de l'ensemble au niveau de la zone de contact 9 est garantie par un joint d'étanchéité 14 logé dans une gorge (non référencée) de la bride 13.

Le disjoncteur et le sectionneur raccordés entre eux sont par ailleurs reliés à des lignes électriques ou autres installations électriques dont ils assurent la sécurité.

Lors du fonctionnement de ces installations électriques, il est parfois nécessaire de démonter l'un des appareils, par exemple le disjoncteur, pour des raisons de maintenance par exemple, tout en laissant le sectionneur en marche, et donc sous pression, afin de ne pas trop perturber le fonctionnement de l'installation.

La Demanderesse a constaté que, étant donnée la forte pression (typiquement 3,5 bars) à laquelle est soumise la paroi isolante 6 du sectionneur, l'opérateur effectuant les opérations de démontage, de réparation éventuelle et de remontage court des risques importants.

En premier lieu, s'il y a un défaut de centrage de l'élément 4 par exemple, lorsque l'opérateur tente d'embrocher les deux éléments, il applique une contrainte de flexion sur l'élement 4, ce qui soumet la paroi 6 à une contrainte mécanique relativement importante. La paroi 6 est en outre soumise à des contraintes de pression élevées dues à la présence du fluide 15 dans l'enveloppe 2. La combinaison de ces efforts peut provoquer l'explosion de la paroi 6.

Or, au moment où les contraintes commencent à s'appliquer sur la paroi 6, les éléments 3 et 4 ne sont pas encore entièrement raccordés, et le volume 7 n'est par conséquent pas encore totalement isolé du milieu extérieur. L'explosion de la paroi 6 crée, du fait de la pression, des projections de morceaux de cette paroi hors du volume 7 encore ouvert. Ces projections risquent d'atteindre et de blesser l'opérateur.

Par ailleurs, lors de la désolidarisation des éléments de contact 3 et 4 embrochés l'un dans l'autre, ou maintenus fermement par tout autre type de raccord, la force à appliquer dans le sens de la flèche F de la figure 1 peut être anormalement élevée, par exemple du fait d'un mauvais embrochage, non détectable par l'opérateur, et créer ainsi un effort trop important sur les éléments de contact. Dans ce cas, la séparation soumet la paroi 6 à des contraintes importantes qui risquent, en combinaison avec les contraintes de pression allant dans le même sens, de la faire exploser.

Dans d'autres cas, une fois les éléments de contact 3 et 4 désolidarisés, il se peut que l'opérateur applique par inadvertance un choc sur la paroi 6, au moyen par exemple d'un outil, ce qui pourrait avoir les mêmes conséquences d'explosion que précédemment.

Dans ces deux derniers cas, l'explosion de la paroi 6 est aussi dangereuse pour l'opérateur que lors de la solidarisation des éléments 3 et 4.

On connaît par ailleurs par le brevet US-3 886 301 un système de raccordement des enveloppes de deux appareils dont l'un au moins est sous pression, du type de celui de la figure 1, et dans lequel l'une des enveloppes est prolongée de sorte que l'autre enveloppe puisse s'y enficher. Ce système de raccordement ne permet cependant pas de résoudre les problèmes posés ci-dessus.

La présente invention a donc pour but de réaliser un système de raccordement permettant de protéger l'opérateur contre des explosions éventuelles de la paroi maintenue sous pression.

La présente invention propose à cet effet un système de raccordement de deux enveloppes séparant du milieu extérieur respectivement deux appareils comportant chacun au moins un élément de contact, lesdits éléments de contact étant destinés à coopérer l'un avec l'autre au niveau d'une zone de raccordement, l'un au moins desdits éléments de contact étant saillant au-delà d'une paroi isolante fermant en totalité l'enveloppe associée, ladite zone de raccordement se situant au voisinage de la ou desdites parois isolantes dans un volume fermé par rapport au milieu extérieur, au moins l'une de ces parois isolantes étant soumise à la pression d'un fluide situé à l'intérieur de l'enveloppe associée, et une pièce de fermeture solidaire d'une première desdites enveloppes, entourant ladite zone de raccordement,
**caractérisé en ce que** ladite pièce de fermeture, a une longueur au moins égale à la distance nécessaire pour solidariser ou désolidariser entièrement lesdits éléments de contactde sorte que, pendant la solidarisation ou la désolidarisation desdits éléments de contact par accouplement ou séparation desdites enveloppes, ledit volume reste fermé et ainsi ladite zone de raccordement reste séparée du milieu extérieur.

Grâce à l'invention, même si l'une des parois isolantes explose au moment de la solidarisation ou de la désolidarisation, le volume dans lequel se trouve la zone de raccordement reste fermé, les projectiles éventuels restent confinés dans le volume fermé ainsi conservé et ne peuvent ni atteindre l'opérateur, ni le blesser.

Selon un premier mode de réalisation possible du système de raccordement selon l'invention, l'extrémité de la deuxième enveloppe est enfichée dans la première enveloppe au niveau de la zone de raccordement, la pièce de fermeture étant alors constituée par la portion de la première enveloppe entourant l'extrémité de la deuxième enveloppe qui y est enfichée. Par exemple, la première enveloppe se prolonge au-delà de l'extrémité de l'élément de contact associé, le prolongement ainsi obtenu constituant la pièce de fermeture.

Dans ce mode de réalisation, il n'y a plus de zone de contact entre les enveloppes sensiblement au droit de la zone de raccordement entre les éléments de contact. Au contraire, le raccordement des deux enveloppes se fait sur une longueur qui s'étend de part et d'autre de la zone de raccordement. De cette manière, au moment de la solidarisation ou de la désolidarisation des éléments de contact, le volume entourant la zone de raccordement reste fermé, alors que dans l'art antérieur, ce volume est encore ouvert au commencement du raccordement des éléments de contact ou s'ouvre au même instant que se produit la désolidarisation des éléments de contact.

Selon un deuxième mode de réalisation possible du système de raccordement selon l'invention, les extrémités des enveloppes se prolongent transversalement par des brides venant au contact l'une avec l'autre au droit de la zone de raccordement, et la pièce de fermeture est enfilée sur la première enveloppe, une portion de cette pièce de fermeture venant buter contre la bride solidaire de la première enveloppe, et une autre portion de la pièce de fermeture dépassant au-delà de la bride sur une longueur au moins égale à la distance nécessaire pour solidariser ou désolidariser entièrement les éléments de contact, cette autre portion étant telle que l'extrémité de la deuxième enveloppe munie de la bride associée est glissée dans la pièce de fermeture.

Dans ce deuxième mode de réalisation, même si la zone de contact entre les deux enveloppes se trouve toujours au droit de la zone de raccordement, la pièce de fermeture supplémentaire entourant les deux enveloppes au niveau du volume où se trouve la zone de raccordement empêche d'éventuelles projections de débris vers l'extérieur.

La pièce de fermeture du deuxième mode de réalisation peut être amovible, pour être installée uniquement lorsque l'on souhaite désolidariser les deux enveloppes.

La pièce de fermeture précédente peut également être transparente.

Avantageusement, dans le premier mode de réalisation, la deuxième enveloppe peut être percée, au niveau de son extrémité enfichée dans la première enveloppe, d'orifices de passage de piges amovibles. Ces piges sont destinées à effectuer le centrage de l'élément de contact correspondant lorsque la paroi isolante associée se trouve en retrait loin de la zone de raccordement et ne peut donc servir à centrer l'élément de contact.

D'autres caractéristiques et avantages de la présente invention apparaîtront dans la description qui va suivre d'un mode de réalisation de l'invention, donnée à titre illustratif et nullement limitatif.

Dans les figures suivantes :
- la figure 1 représente en coupe longitudinale partielle un système de l'art antérieur pour le raccordement des enveloppes d'un disjoncteur et d'un sectionneur,
- la figure 2 représente en coupe longitudinale partielle et en position fermée un système de raccordement des enveloppes d'un disjoncteur et d'un sectionneur entrant dans un premier mode de réalisation de la présente invention,
- la figure 3 représente le système de raccordement de la figure précédente en position partiellement ouverte,
- la figure 4 représente le système de raccordement de la figure 2 en position totalement ouverte et muni d'un couvercle de protection,
- la figure 5 représente un perfectionnement du système de raccordement des figures 2 à 4,
- la figure 6 est une vue schématique de côté de la figure 5,
- la figure 7 représente en coupe longitudinale partielle et en position fermée un système de raccordement des enveloppes d'un disjoncteur et d'un sectionneur entrant dans un deuxième mode de réalisation de la présente invention,
- la figure 8 représente en perspective éclatée la pièce de protection du système de raccordement de la figure 7. Dans toutes ces figures, les éléments communs portent les mêmes numéros de référence.

La figure 1 a été décrite lors de la présentation de l'état de la technique.

On a représenté aux figures 2 à 4 en coupe longitudinale partielle un système de raccordement des enveloppes 1 et 2 entrant dans un premier mode de réalisation de la présente invention, dans différentes position de fonctionnement.

Dans ce premier mode de réalisation, au lieu de se terminer au niveau d'une zone de contact se trouvant sensiblement au droit de la section de la zone de raccordement 8 entre les éléments de contact 3 et 4, les enveloppes 1 et 2 comportent des prolongements référencés respectivement 21 et 22. Le prolongement ou extrémité 21 de l'enveloppe 1 se termine au voisinage de la paroi isolante 6 et le prolongement ou pièce de fermeture 22 de l'enveloppe 2, dite première enveloppe, se termine au voisinage de la paroi isolante 5.

Le prolongement 22 a un diamètre supérieur à celui de l'extrémité 21 de sorte que, lorsque les éléments de contact 3 et 4 coopèrent l'un avec l'autre, l'extrémité 21 est glissée dans le prolongement 22, les enveloppes 1 et 2 étant ainsi enfichées l'une dans l'autre. La distance sur laquelle l'extrémité 21 s'enfiche dans le prolongement 22 est au moins égale à la distance nécessaire pour solidariser ou désolidariser entièrement les éléments de contact 3 et 4.

Pour permettre aux brides 12 et 13 de venir au contact l'une de l'autre afin d'assurer la solidarisation des enveloppes 1 et 2, la bride 13 est déplacée jusqu'à l'extrémité du prolongement 22 alors que la bride 12 reste au même emplacement que dans l'art antérieur.

On remarque en outre que la paroi isolante 5 se trouve dans une position opposée à celle de la figure 1. Ceci permet de laisser un plus grand espace libre dans l'enveloppe 1 afin d'y installer facilement tous les dispositifs souhaités. Une telle disposition de la paroi isolante 5 est rendue possible grâce à l'extrémité 21 de l'enveloppe 1. Elle n'aurait bien entendu pas été possible dans le système de raccordement de l'art antérieur, car elle n'aurait pas laissé un volume 7 suffisamment grand pour effectuer le raccordement des éléments de contact 3 et 4.

La figure 2 montre le système de raccordement fermé, c'est-à-dire avec les éléments de contact 3 et 4 solidaires l'un de l'autre.

En figure 3, on a représenté le système de raccordement précédent partiellement ouvert, au moment où les éléments de contact sont solidarisés ou désolidarisés par action d'un opérateur sur l'enveloppe 1 par exemple, respectivement dans le sens opposé à celui de la flèche F et dans le même sens que cette dernière.

Comme on l'a déjà expliqué, c'est le plus souvent au moment où les éléments de contact sont solidarisés l'un avec l'autre, et parfois lorsqu'ils sont désolidarisés l'un de l'autre, que la paroi isolante 6 risque d'exploser. Selon l'invention, à l'un ou l'autre de ces moments, le volume 7 est encore séparé du milieu extérieur grâce à l'extrémité 21 et au prolongements 22. Ainsi, les projectiles provenant de l'explosion de la paroi 6 sont confinés dans le volume 7 et ne risquent pas de blesser l'opérateur. Le prolongement 22 sert ainsi à fermer et à protéger le volume 7 pendant la solidarisation ou la désolidarisation.

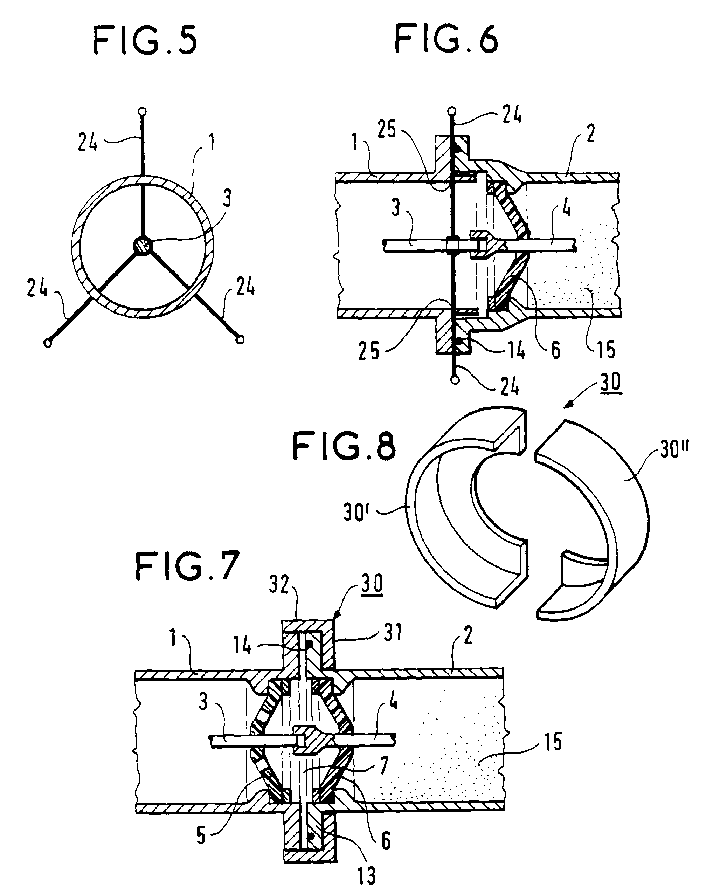

Lors de la désolidarisation, l'opérateur peut ensuite, après un temps nécessaire à l'établissement de l'équilibre de pression entre le volume 7 et l'intérieur de la première enveloppe 2 s'il y a eu explosion, ou quasiment immédiatement après la désolidarisation des éléments de contact 3 et 4 s'il n'y a pas eu explosion, séparer entièrement les deux enveloppes. On voit en figure 4 le système de raccordement selon l'invention entièrement ouvert, c'est-à-dire avec les enveloppes 1 et 2 séparées l'une de l'autre.

Une fois cette séparation effectuée, et s'il n'y a pas eu explosion de la paroi isolante 6, l'opérateur peut alors installer un couvercle de protection 23 permettant de fermer la première enveloppe 2 au niveau du prolongement 22. Grâce à cela, il ne risquera pas d'endommager la paroi 6 par suite d'un choc fortuit, et évitera donc l'explosion de cette dernière.

On a représenté aux figures 5 et 6 un perfectionnement possible du système de raccordement selon l'invention. Ce perfectionnement est utile lorsque l'élément de contact 3 n'est pas centré dans l'enveloppe 1 à l'aide de la paroi isolante 5. Ceci peut se produire notamment lorsque la paroi isolante 5 se trouve en retrait loin de la zone de raccordement 8.

On comprend bien alors que le raccordement des éléments de contact 3 et 4 peut être délicat, l'élément de contact 3 n'étant pas nécessairement bien centré dans l'enveloppe 1 et la visibilité au niveau de la zone de raccordement étant réduite.

On peut alors utiliser trois piges de centrage 24 de l'élément de contact 3. Pour que le centrage soit correct, il faut que les piges agissent sur l'élément de contact 3 au niveau d'une portion de ce dernier proche de son extrémité. D'autre part, les orifices de passage des piges 24 dans l'enveloppe 1 doivent être fermés pendant le fonctionnement de l'installation électrique à laquelle appartiennent le disjoncteur et le sectionneur.

L'extrémité 21 de l'enveloppe 1 permet de satisfaire les deux exigences précédentes. En effet, si des orifices de passage 25 des piges 24 sont percés au niveau de l'extrémité 21 au voisinage immédiat de la bride 12, on peut y introduire les piges 24 qui maintiennent, au voisinage de son extrémité, l'élément de contact 3 centré dans l'enveloppe 1, puis on effectue le raccordement entre les éléments de contact 3 et 4 facilement puisque ces derniers sont bien centrés. Une fois le raccordement effectué, on retire les piges 24 et l'on vient serrer les brides 12 et 13 l'une contre l'autre. Les orifices 25 sont recouverts par le prolongement 22 et donc fermés pendant le fonctionnement des appareils. L'étanchéité de l'ensemble est assurée par le joint d'étanchéité 14.

Les orifices de passage 25, et par conséquent les piges 24, auront bien entendu un diamètre tel que :
- des projectiles issus de l'explosion de la paroi isolante 6 ne peuvent passer par les orifices 25 au moment de la séparation des éléments de contact 3 et 4,
- l'épaisseur supplémentaire apportée par les piges 24 au moment du raccordement n'empêche pas l'embrochage des éléments de contact 3 et 4.

Dans le système de raccordement de l'art antérieur, représenté en figure 1, le centrage des éléments de contact ne pouvait être effectué de la manière qui vient d'être décrite, à l'aide des piges de centrage 24, qu'en pratiquant des orifices directement dans les enveloppes 1 ou 2, ces orifices ne pouvant être fermés au moment du raccordement. Ceci n'aurait donc pu être envisageable qu'au prix de l'utilisation de pièces supplémentaires destinées à obturer les orifices après raccordement.

L'utilisation des piges est rendue possible et moins complexe du fait de l'existence de l'extrémité 21 selon l'invention.

On a représenté en figure 7 un deuxième mode de réalisation de la présente invention, en position fermée.

Dans ce mode de réalisation, tous les éléments sont identiques à ceux de la figure 1, à l'exception d'une pièce de fermeture 30 de section transversale circulaire et de section longitudinale en forme de U, dont le fond 31 est percé d'une ouverture circulaire de diamètre légèrement supérieur à celui de la première enveloppe 2. La pièce de fermeture 30 est enfilée sur la première enveloppe 2 par exemple, soit lors de la fabrication du sectionneur, soit au moment où l'on souhaite procéder à la séparation des enveloppes 1 et 2. Dans ce dernier cas, pour faciliter son installation et son retrait, la pièce de fermeture 30 est par exemple constituée de deux demi-coquilles amovibles 30' et 30" (voir figure 8) assemblées par des moyens quelconques non représentés.

Le fond 31 de la pièce 30 vient buter contre la bride 13, et sa paroi latérale 32 dépasse ainsi au-delà de la bride 13 de manière à prolonger longitudinalement cette dernière. Le diamètre de la pièce 30 au niveau de la paroi 32 est sensiblement égal à celui des brides 12 et 13. La longueur de la paroi 32 dans le sens longitudinal est au moins égale à la distance nécessaire pour désolidariser entièrement les éléments de contact 3 et 4 l'un de l'autre. Ainsi, l'extrémité de l'enveloppe 1 munie de la bride 12 peut être glissée dans la pièce 30.

On obtient avec le système représenté en figure 7 les mêmes résultats qu'avec le système des figures 2 à 6.

La pièce de fermeture 30 peut être transparente. De cette manière, il est possible de vérifier lors de la solidarisation des enveloppes 1 et 2 que le joint d'étanchéité 14 ne s'est pas déplacé.

Bien évidemment, l'invention n'est pas limitée au mode de réalisation qui vient d'être décrit.

En particulier, dans le premier mode de réalisation, c'est l'enveloppe 1 qui s'enfiche dans la première enveloppe 2, mais il peut tout aussi bien se faire que l'enveloppe 2 s'enfiche dans l'enveloppe 1.

Il n'est pas nécessaire d'employer deux prolongements pour mettre en oeuvre l'invention. Si la position et la forme des parois isolantes 5 et 6 sont adaptées pour que le raccordement des éléments de contact 3 et 4 puisse être effectué, un seul prolongement suffit, par exemple le prolongement 22.

Les systèmes de raccordement représentés sont appliqués à des appareils du type monophasé (il y a une phase, et donc un élément de contact, par enveloppe pour chacun des appareils, soit en tout trois enveloppes). Toutefois, l'invention peut également s'appliquer à des systèmes de raccordement pour appareils du type triphasé. Dans ce cas, il y a trois phases, et donc trois éléments de contact parallèles, par enveloppe. Une telle disposition ne change rien au principe de l'invention ni à ceux des modes de réalisation particuliers décrits. Il faut simplement adapter les dimensions des différents éléments.

Les enveloppes 1 et 2 ne sont en outre pas nécessairement cylindriques.

On peut utiliser tout moyen de fixation des enveloppes 1 et 2 autre que les brides.

Les éléments de contact 3 et 4 peuvent se raccorder par embrochage ou par toute autre méthode.

L'invention peut s'appliquer au raccordement des enveloppes de tout type d'appareil, électrique ou autre, dans lequel les risques mentionnés dans le préambule existent.

Enfin, on pourra remplacer tout moyen par un moyen équivalent sans sortir du cadre de l'invention.

## Revendications

1. Système de raccordement de deux enveloppes (1, 2) séparant du milieu extérieur respectivement deux appareils comportant chacun au moins un élément de contact (3, 4), lesdits éléments de contact (3, 4) étant destinés à coopérer l'un avec l'autre au niveau d'une zone de raccordement (8), l'un au moins desdits éléments de contact (3, 4) étant saillant au-delà d'une paroi isolante (5, 6) fermant en totalité l'enveloppe associée (1, 2), ladite zone de raccordement (8) se situant au voisinage de la ou desdites parois isolantes (5, 6) dans un volume fermé (7) par rapport au milieu extérieur, au moins l'une de ces parois isolantes (6) étant soumise à la pression,d'un fluide (15) situé à l'intérieur de l'enveloppe associée (2), qu'elle ferme totalement et un prolongement (22) solidaire d'une première desdites enveloppes (2), entourant ladite zone de raccordement (8),
**caractérisé en ce que** ledit prolongement (22) a une longueur au moins égale à la distance nécessaire pour solidariser ou désolidariser entièrement lesdits éléments de contact (3, 4) de sorte que, pendant la solidarisation ou la désolidarisation desdits éléments de contact (3, 4) par accouplement ou séparation desdites enveloppes (1, 2), ledit volume (7) reste fermé et ainsi ladite zone de raccordement (8) reste séparée du milieu extérieur.

2. Système selon la revendication 1 caractérisé en ce que l'extrémité (21) de la deuxième enveloppe (1), est enfichée dans ladite première enveloppe (2) au niveau de ladite zone de raccordement (8), ledit prolongement (22) étant alors constitué par la portion de ladite première enveloppe (2) entourant l'extrémité (21) de ladite deuxième enveloppe (1) qui y est enfichée.

3. Système selon la revendication 2 caractérisé en ce que ladite première enveloppe (2) se prolonge au-delà de l'extrémité dudit élément de contact (4) associé, le prolongement ainsi obtenu constituant ledit prolongement (22).

4. Système selon la revendication 1 caractérisé en ce que les extrémités desdites enveloppes (1, 2) se prolongent transversalement par des brides (12, 13) venant au contact l'une avec l'autre au droit de ladite zone de raccordement (8), et en ce que ladite pièce de fermeture (30) est enfilée sur ladite première enveloppe (2), une portion (31) de ladite pièce de fermeture (30) venant buter contre ladite bride (13) solidaire de ladite première enveloppe (2), et une autre portion (32) de ladite pièce de fermeture (30) dépassant au-delà de ladite bride (13) sur une longueur au moins égale à la distance nécessaire pour solidariser ou désolidariser entièrement lesdits éléments de contact (3, 4), ladite autre portion (32) étant telle que l'extrémité de ladite deuxième enveloppe (1) munie de ladite bride associée (12) est glissée dans ladite pièce de fermeture (30).

5. Système selon la revendication 4 caractérisé en ce que ladite pièce de fermeture (30) est amovible.

6. Système selon l'une des revendications 4 ou 5 caractérisé en ce que ladite pièce de fermeture (30) est constituée d'un matériau transparent.

7. Système selon l'une des revendications 2 ou 3 caractérisé en ce que ladite deuxième enveloppe (1) est percée, au niveau de son extrémité (21) enfichée dans ladite première enveloppe (2), d'orifices de passage (25) de piges amovibles (24).

## Patentansprüche

1. System zum Anschluß zweier Gehäuse (1, 2), die zwei je mindestens ein Kontaktelement (3, 4) enthaltende Geräte vor der Außenumgebung schützen, wobei die Kontaktelemente miteinander in Höhe einer Anschlußzone zusammenwirken sollen und mindestens eines der Kontaktelemente (3, 4) über eine isolierende Wand (5, 6) vorsteht, die das zugehörige Gehäuse (1, 2) vollständig verschließt, wobei die Anschlußzone (8) sich in der Nähe der isolierenden Wand oder Wände (5, 6) in einem in Bezug auf die Außenumgebung geschlossenen Volumen (7) befindet, wobei mindestens eine dieser isolierenden Wände (6) dem Druck eines Fluids (15) unterliegt, das sich innerhalb des ersten Gehäuses (2) befindet, und wobei eine mit einem ersten Gehäuse (2) fest verbundene Verlängerung die Anschlußzone (8) umgibt, dadurch gekennzeichnet, daß die Verlängerung (22) eine Länge mindestens gleich dem Abstand hat, der nötig ist, um die Kontaktelemente (3, 4) aneinander zu befestigen oder voneinander zu lösen, so daß während der Befestigung oder des Lösens der Kontaktelemente (3, 4) durch Koppeln oder Trennen der Gehäuse (1, 2) das Volumen (7) geschlossen und somit die Anschlußzone (8) von der Außenumgebung isoliert bleibt.

2. System nach Anspruch 1, dadurch gekennzeichnet, daß das Ende (21) des zweiten Gehäuses (1) in das erste Gehäuse (2) in Höhe der Anschlußzone (8) eingesteckt ist und daß die Verlängerung (22) dann aus dem Abschnitt des ersten Gehäuses (2) besteht, der das Ende (21) des zweiten Gehäuses (1) umgibt, das dort hineingesteckt ist.

3. System nach Anspruch 2, dadurch gekennzeichnet, daß das erste Gehäuse (2) über das Ende des zugehörigen Kontaktelements (4) verlängert ist, wobei die so erhaltene Verlängerung die erwähnte Verlängerung (22) bildet.

4. System nach Anspruch 1, dadurch gekennzeichnet, daß die Enden der Gehäuse (1, 2) in Querrichtung durch Flansche (12, 13) verlängert sind, die miteinander in Höhe der Anschlußzone (8) in Kontakt gelangen, und daß das Schließteil (30) auf das erste Gehäuse (2) aufgeschoben ist, wobei ein Abschnitt (31) des Schließteils (30) gegen den mit dem ersten Gehäuse (2) fest verbundenen Flansch (13) in Anschlag gelangt und ein anderer Abschnitt (32) des Schließteils (30) über den Flansch (13) über eine Länge vorsteht, die mindestens gleich dem Abstand ist, der notwendig ist, um die Kontaktelemente (3, 4) vollständig aneinander anzuschließen oder voneinander zu lösen, wobei der andere Abschnitt (32) so gestaltet ist, daß das mit dem zugehörigen Flansch (12) versehene Ende des zweiten Gehäuses (1) in das Schließteil (30) geschoben wird.

5. System nach Anspruch 4, dadurch gekennzeichnet, daß das Schließteil (30) abnehmbar ist.

6. System nach einem der Ansprüche 4 oder 5, dadurch gekennzeichnet, daß das Schließteil (30) aus einem durchsichtigen Material besteht.

7. System nach einem der Ansprüche 2 oder 3, dadurch gekennzeichnet, daß das zweite Gehäuse (1) in Höhe seines in das erste Gehäuse (2) eingesteckten Endes (21) Durchlaßöffnungen (25) für entfernbare Stifte (24) aufweist.

## Claims

1. A system for interconnecting two envelopes (1, 2) separating two respective devices from the external environment, each device including at least one contact element (3, 4), said contact elements (3, 4) being designed to co-operate with each other in a connection zone (8), at least one of said contact elements (3, 4) projecting beyond an insulating wall (5, 6) that totally closes the associated envelope (1, 2), said connection zone (8) being situated in the vicinity of said insulating wall(s) (5, 6) in a volume (7) that is closed relative to the external environment, at least one of the insulating walls (6) being subjected to the pressure of a fluid (15) situated inside the first envelope (2) that it closes totally, and an extension secured to the first envelope (2) surrounding said connection zone (8),
said system being characterized in that said extension (22) has a length not less than the distance required for fully engaging or disengaging said contact elements (3, 4), in such a manner that during engagement or disengagement of said contact elements (3, 4) by said envelopes (1, 2) being coupled together or separated, said volume (7) remains closed, thus ensuring that said connection zone (8) remains separated from the external environment.

2. A system according to claim 1, characterized in that the end (21) of the second envelope (1) is engaged in said first envelope (2) at said connection zone (8), said extension (22) then being constituted by the portion of said first envelope (2) that surrounds the end (21) of said second envelope (1) which is engaged therein.

3. A system according to claim 2, characterized in that said first envelope (2) extends beyond the end of said associated contact element (4), the extension thus obtained constituting said extension (22).

4. A system according to claim 1, characterized in that the ends of said envelopes (1, 2) are extended transversely by flanges (12, 13) that come into contact with each other level with said connection zone (8), and in that said closure piece (30) is placed around said first envelope (2), a portion (31) of said closure piece (30) coming into abutment against said flange (13) secured to said first envelope (2), and another portion (32) of said closure piece (30) projecting beyond said flange (13) over a length that is not less than the distance required for fully engaging or disengaging said contact elements (3, 4), said other portion (32) being such that the end of said second envelope (1) provided with its associated flange (12) is slid inside said closure piece (30).

5. A system according to claim 4, characterized in that said closure piece (30) is removable.

6. A system according to claim 4 or 5, characterized in that said closure piece (30) is made of a transparent material.

7. A system according to claim 2 or 3, characterized in that said second envelope (1) is pierced through its end (21) engaged in said first envelope (2) by orifices (25) for passing removable gauges (24).
